# EUROPÄISCHE PATENTSCHRIFT

(11) **EP 0 305 814 B1**
(45) Veröffentlichungstag und Bekanntmachung des Hinweises auf die Patenterteilung: **04.08.1993**
(21) Anmeldenummer: 88113385.4
(22) Anmeldetag: 18.08.1988
(51) Int. Cl.: H04B 7/185

(54) **Verfahren zum Ausgleichen von durch den Doppler-Effekt hervorgerufenen Laufzeit-Verschiebungen der Bursts in einem TDMA-Rahmen sowie Anordnung**
Method and arrangement for compensating bursts transit-time changes, induced by the Doppler effect, in a TDMA frame
Procédé et dispositif de compensation des variations de temps de parcours des rafales d'une trame AMRT dues à l'effet Doppler

(30) Priorität: 04.09.1987 DE 3729586
(43) Veröffentlichungstag der Anmeldung: 08.03.1989
(73) Patentinhaber: ANT Nachrichtentechnik GmbH, D-71522 Backnang (DE)
(72) Erfinder: Rieger, Günther, Dipl.-Ing., D-7159 Auenwald 1 (DE)

(56) Entgegenhaltungen:
- DE-A- 2 339 455
- ELECTRONICS LETTERS, Band 22, Nr. 5, Februar 1986, Seiten 286-287, Stevenage, Herts, GB; R.J. SIMPSON et al.: "New frame synchroniser for satellite-switched time-division multiple-access systems"
- FREQUENZ, Band 25, Nr. 10, Oktober 1971, Seiten 303-308, Berlin, DE; J. DÖMER et al.: "Aufgaben und Probleme der sendeseitigen Ablaufsteuerung von TDMA-Systemen"
- INTERNATIONAL CONFERENCE ON COMMUNICATIONS 1985, Chicago, 23. - 26. Juni 1985, Seiten 999-1004, IEEE, New York, US; F. PATTINI et al.: "A synchronization technique for the on-board master clock of a regenerative TDMA satellite communications system"

## Beschreibung

Die Erfindung betrifft ein Verfahren gemäß dem Oberbegriff des Patentanspruchs 1 sowie eine Anordnung hierzu.

Zum Ausgleichen von durch den Doppler-Effekt hervorgerufenen Laufzeit-Verschiebungen der Bursts (Datenbündel) verschiedener Teilnehmerstationen, insbesondere Satelliten-Bodenstationen, bei Empfang durch einen Transponder, insbesondere einen Satelliten, ist es bekannt ein zusätzliches Referenzsignal auszutauschen aus dessen Differenz zu einem weiteren Signal ein Steuersignal für eine Frequenz- bzw. Phasenregelung abgeleitet wird (DE-A-2 339 455). Aus der DE-A-2 843 189 ist es bekannt eine Leitstation zur Organisation des TDMA Verkehrs und zum Ausgleich von Doppler-Laufzeitverschiebungen heranzuziehen. Die Empfangskreise dieser Leitstationen verfolgen die von den Bodenstationen ausgesendeten und über den Transponder rückgesendeten Bezugsbursts (Rahmenbezugsbündel). Sobald alle Bezugsbursts erkannt sind, wird die zeitliche Lage der Empfangslücken ausgerichtet und dabei die Korrektur von Dopplereffekten durchgeführt, bis die empfangenen Bezugsbursts richtig ausgerichtet sind.

Aufgabe der Erfindung ist es das Verfahren ausgehend vom Oberbegriff des Patentanspruchs 1 so auszugestalten, daß der Laufzeitausgleich ohne den zusätzlichen Datentausch mit einer Teilnehmerstation oder Leitstation durchgeführt werden kann. Außerdem soll eine Anordnung zum Durchführen eines solchen Verfahrens aufgezeigt werden. Diese Aufgabe wird bezüglich des Verfahrens durch die kennzeichnenden Merkmale des Patentanspruchs 1 und bezüglich der Anordnung durch die Merkmale des Patentanspruchs 6 gelöst. Die Patentansprüche 2 bis 5 betreffen Ausgestaltungen des Verfahrens

Das Verfahren nach der Erfindung weist insbesondere den Vorteil auf, daß der Ausgleich der Laufzeit-Verschiebungen der Bursts, hervorgerufen durch den Doppler-Effekt, "onboard", d. h. im Transponder (Satelliten), ohne Rückkopplung zu einer Bodenstation erfolgen kann. Ein Synchronlauf zwischen dem Systemtakt des Satelliten und dem aus den Bursts rückgewonnenen Takt wird ohne Rückmeldung des TDMA-Signals zu einer Bodenstation erreicht. Dies vereinfacht den Datentausch zwischen Satellit und Bodenstationen erheblich. Nach Auffinden eines zwischen Satellit und Bodenstation/en vereinbarten Kennwortes muß nur noch eine Nachregelung einmal pro Rahmen "onboard" erfolgen. Durch Speicherung zuvor ermittelter Ergebnisse kann bei den nächsten Regelzyklen hierauf zurückgegriffen werden, was die Verarbeitung erheblich vereinfacht. Das Verfahren nach der Erfindung eignet sich besonders zum Datenverkehr im Inmarsat-Netz, welches die Aufgabe hat, Zwei-Wege-Verbindungen zwischen Küstenfunkstellen und Schiffen, bzw. Ölförderplattformen, herzustellen.

Anhand der Zeichnungen wird eine Ausführung der Erfindung nun näher erläutert. Es zeigen:
- Figur 1: den Rahmenaufbau der TDMA-Übertragung und
- Figur 2: einen Stromlaufplan einer Anordnung zum Durchführen des Verfahrens nach der Erfindung.

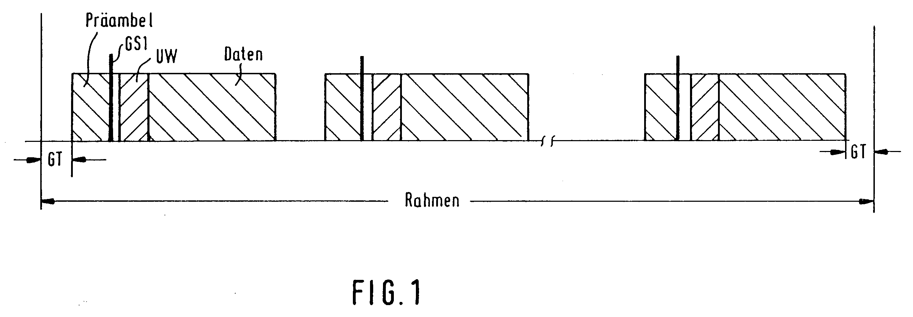

Wie in Figur 1 dargestellt, ist am Anfang jedes TDMA-Rahmens eine Sicherheitszeit (guard time) GT vorgesehen. Die Datenbursts bestehen jeweils aus einer Präambel, einem Kontrollwort (unique word) und einem Datenteil, wobei der Datenteil Befehlsdaten oder Kommunikationsdaten enthalten kann. Die Präambel enthält eine Information zur Taktrückgewinnung und das Kontrollwort ein Bitmuster, beispielsweise bestehend aus 16 Bits, welches sowohl den Bodenstationen als auch dem Satelliten bekannt ist. Aufgrund dieses Bitmusters läßt sich ein Steuersignal für einen Phasenvergleich generieren wie nachfolgend noch näher erläutert wird

In einem TDMA-Rahmen sind beispielsweise die Bursts von 25 Bodenstationen untergebracht, wobei jeder dieser 25 Bodenstationen 28 Bursts für verschiedene Ausleuchtgebiete zugeordnet sein können.

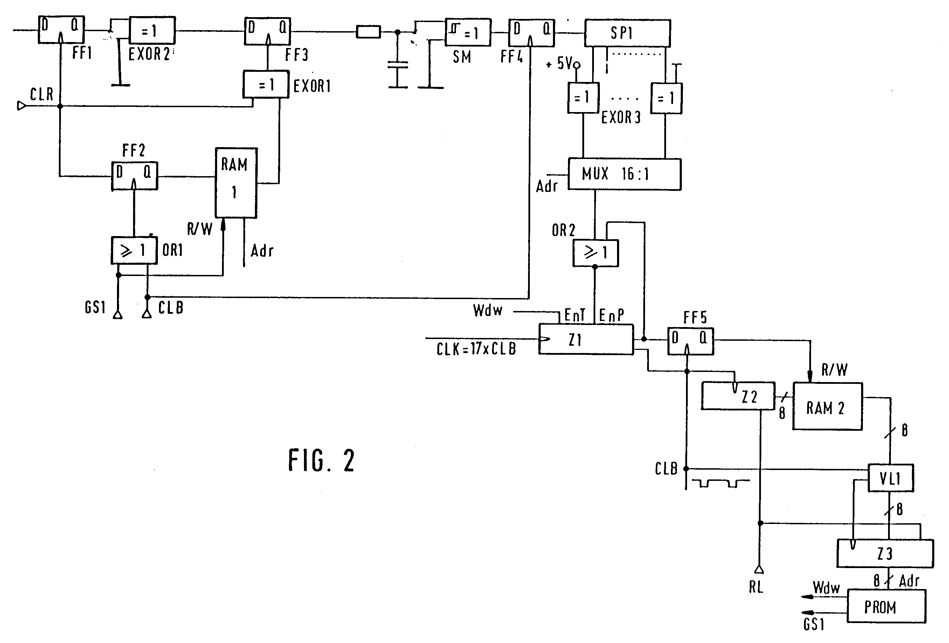

Die demodulierten Datenbursts werden bei der Schaltung (Figur 2) zum Durchführen des Verfahrens nach der Erfindung dem eingangsseitigen D-Flip-Flop FF1 zugeführt. Ein aus der Präambel der Datenbursts rückgewonnener Takt CLR wird zur Taktung des Flip-Flops FF1 verwendet. Für die Taktrückgewinnung des Takts CLR aus der Präambel können übliche Anordnungen verwendet werden, beispielsweise eine Phasenregelschleife. Das Flip-Flop FF1 stellt eine feste Phasenbeziehung zwischen der jeweiligen Burstinformation und dem rückgewonnen Takt CLR her. Der Ausgang Q des Flip-Flops FF1 ist mit einem Exclusiv-ODER-Gatter EXOR2 beschaltet. Ein zweites Flip-Flop FF2 dient zum Phasenvergleich zwischen dem Systemtakt CLB des Satelliten und dem rückgewonnenen Takt CLR. Die Taktung dieses Flip-Flops FF2 erfolgt nicht durch den Systemtakt CLB direkt, sondern über eine Verknüpfungslogik - ODER-Gatter OR1 -, die zum einen den Systemtakt CLB zugeführt erhält und zum andern ein Steuersignal GS1, welches in einer speziellen Generierstufe für die Bursts jeder Bodenstation separat aufbereitet wird, wie später noch näher erläutert wird. Pro Rahmen wird das Ergebnis des Phasenvergleichs für die Bursts jeder Bodenstation separat in einem Speicher RAM1 abgespeichert, da die Bursts jeder Bodenstation natürlich jeweils eine andere Laufzeit in Bezug auf den Satellit besitzen. Die abgespeicherten Phasenvergleichsergebnisse für jede Bodenstation stehen als Bezugswerte für den Phasenvergleich im nächsten TDMA-Rahmen zur Verfügung. Die Schreib-Lese-Steuerung R/W des Speichers RAM1 erfolgt ebenfalls durch das generierte Steuersignal GS1. Eine logische Antivalenz-Verknüpfungsschaltung EXOR1 verknüpft den rückgewonnenen Takt CLR mit dem Ergebnis jeden Phasenvergleichs am Ausgang des Speichers RAM1. Wenn der Ausgang Q des Flip-Flops FF2 eine logische 0 zeigt, wird der rückgewonnene Takt CLR unverändert an den Takteingang eines weiteren D-Flip-Flops FF3 weitergegeben.Zeigt der Ausgang Q des zweiten Flip-Flops FF2 eine logische 1 wird der rückgewonnene Takt CLR invertiert an den Takteingang dieses Flip-Flops FF3 weitergeleitet. Da das Flip-Flop FF3 das Ausgangssignal des Exclusiv-ODER-Gatters EXOR2 als Eingangssignal erhält, bedeutet dies eine Verzögerung der Bursts jeder Bodenstation im nächsten TDMA-Rahmen um die Hälfte einer Systemtaktperiode, wenn der Phasenvergleich ergibt, daß der rückgewonnene Takt CLR bezüglich des Systemtakts um bis zu 180° nacheilt. Eilt der rückgewonnene Takt CLR um mehr als 180° und weniger als 360° nach, so wird der rückgewonnene Takt CLR um die doppelte Zeit, also um eine Systemtaktperiode, verzögert. Am Ausgang ist das Flip-Flop FF3 mit einer Verzögerungsschaltung, bestehend aus einem Widerstand und einem Kondensator beschaltet, die so dimensioniert ist, daß das Ausgangssignal des Flip-Flops FF3 nochmals um ein Viertel des Systemtakts verzögert wird. Diese Verzögerung dient dazu, die Bursts, welche mittels des D-Flip-Flops FF4 auf den Systemtakt CLB synchroniert werden, auch bei kleinen Taktschwankungen am Ausgang der Verknüpfungsschaltung EXOR1 sicher zu synchronisieren, d. h. immer etwa in der Taktmitte auszuwerten. Die Schmitt-Trigger-Schaltung SM dient zur Flankenversteilerung der Eingangssignale des Flip-Flops FF4 und damit ebenfalls zur Erhöhung der Synchronisiersicherheit. Die Ausgangssignale des Flip-Flops FF4, d. h. die Burstdaten, haben durch vorgenannte Maßnahmen immer eine feste Phasenbeziehung zum Systemtakt des Satelliten und können zu verschiedensten Zwecken weiterverarbeitet werden.

Der nachfolgende Schaltungsteil dient zur Erzeugung des Steuersignals GS1 für den Phasenvergleich. Da die Datenbursts für jede Bodenstation mit unterschiedlicher Zeitverzögerung eintreffen, müssen für alle Phasenvergleiche gleiche Bedingungen geschaffen werden. Dazu wird jeweils ein Bitmuster im Kontrollwort UW der Bursts des ersten Rahmens gesucht, und nach Auffinden dieses Bitmusters jeweils ein Steuersignal für den Phasenvergleich der Bursts in den nachfolgenden Rahmen generiert.

Zum Auffinden des beispielsweise 16 Bit breiten Bitmusters im Burst wird das Ausgangssignal des Flip-Flops FF4 zuerst einer Serien-Parallelwandlung mittels eines Serien-Parallel-Wandlers SP1 unterzogen. Die Parallelausgänge des Serien-Parallel-Wandlers SP1 werden auf eine 16 Bit breite Vergleichsstufe EXOR3 geführt, die jedes Ausgangsbit mit einem Schwellwert vergleicht. Die Zusammensetzung der 16 Schwellwerte, d. h. ihre Reihenfolge innerhalb der Vergleichsstufe EXOR3, entspricht hierbei dem zwischen Bodenstation und Satelliten bekannten Bitmuster. Über einen adressgesteuerten Multiplexer MUX 16:1 gelangen die Ausgänge der Vergleichsstufe EXOR3 über ein ODER-Gatter OR2 auf einen Zähler Z1. Dieser Zähler Z1 zählt die Zahl der Übereinstimmungen der Ausgangsbits der Vergleichsstufe EXOR3. Für eine Echtzeitverarbeitung ist der Takt CLK des Zählers Z1 17 x höher als der Systemtakt CLB. Zur Unterdrückung einer Zeichenfolge im Datenteil der Bursts, die zufällig mit dem vereinbarten Bitmuster übereinstimmt, wird der Zähler Z1 über seinen Enable-Eingang EnT von einem Zeitfenster Wdw gesteuert; d. h. der Zähler wird nur innerhalb dieses Zeitfensters zum Zählen freigegeben. Da dieses Zeitfenster Wdw mit den verschiedenen Burstlaufzeiten mitlaufen muß, wird es wie die Phasenvergleichs-Steuersignale für die Bursts jeder Bodenstation separat generiert. Bei der Bitmustererkennung werden 2 Fehler zugelassen; d. h. der Ausgang des Zählers Z1 führt schon eine logische 1, wenn 14 von 16 Bits übereinstimmen. In diesem Fall wird der Zähler Z1 über sein Ausgangssignal und das ODER-Gatter OR2 an seinem Enable-Eingang EnP arretiert. Zurückgesetzt wird der Zähler Z1 bei Eintreffen des 17. Taktimpulses CLK. Das Zeitfenster WdW ist normalerweise auf eine Breite von 18 Bit voreingestellt; d. h. eine Regelung des Bursts um ± 1 Taktschritt ist möglich. Nur wenn ein Bitmuster im Zeitfenster Wdw nicht mehr auffindbar ist, wird die Fensterbreite so vergrößert bis wieder ein Bitmuster auffindbar ist. Das Ausgangssignal des Zählers Z1 wird in das D-Flip-Flop FF5 übernommen. Es dient zur Schreib-Lesesteuerung eines Speichers RAM2. Ein weiterer Zähler Z2 zählt die Systemtaktimpulse CLB. Er wird zu einem festen Zeitpunkt durch einen Rücksetzimpuls RL zurückgesetzt, der wiederum vom Systemtakt CLB abgeleitet ist. Der Ausgang dieses Zählers Z2 ist mit dem Dateneingang des Speichers RAM2 verbunden. Sobald ein Bitmuster erkannt ist, wird der aktuelle Zählerstand des Zählers Z2 in den Speicher RAM2 übernommen, da das Flip-Flop FF5 dann auf Schreibsteuerung umschaltet. Im Speicher RAM2 werden so alle aktuellen Phasenlagen der Bursts der 25 verschiedenen Bodenstationen abgespeichert. Der Zähler Z2 wird zum frühest möglichen Zeitpunkt gestartet. Falls ein Bitmuster nicht erkannt wird, dann wird das Zeitfenster Wdw so lange verbreitert, bis wieder ein Bitmuster gefunden wird. Diese Fensterverbreiterung wird durch eine Verknüpfungslogik VL1 am Ausgang des Speichers RAM2 erreicht, die zum einen die Übernahme der Speicherergebnisse des Speichers RAM2 in einen Zähler Z3 steuert und den dem Zähler zugeführten Takt so lange sperrt bis ein Bitmuster gefunden ist. Der Zähler Z3 ist ein Rückwärtszähler, der als Startwert zum Zählen den Speicherinhalt des Speichers RAM2 erhält. Der Zähler Z3 wird zum gleichen festen Zeitpunkt zurückgesetzt wie der Zähler Z2. Die Ausgangssignale des Zählers Z3 bilden die Adressignale für einen programmierbaren Nur-Lese-Speicher PROM. In diesem Nur-Lese-Speicher PROM sind Informationen für alle Signale abgelegt, die mit der Phase jedes Bursts mitlaufen. Je nach Zählerstand des Zählers Z3 liefert der Nur-Lese-Speicher PROM die Zeitpunkte des Zeitfenstersignals WdW für den Zähler Z1 und des Phasenvergleichs-Steuersignals GS1. Durch diese Maßnahme liegt der Zeitpunkt zu dem der Phasenvergleich vorgenommen wird - Steuersignal GS1- immer an gleicher Stelle des Bursts, beispielsweise kurz vor dem Kontrollwort UW, egal ob die Laufzeit-Verschiebung der Bursts groß oder klein ist. Diese Stelle für die Generierung des Steuersignals GS1 wird deshalb so gewählt, weil in diesem Falle die Taktrückgewinnung ausreichend Zeit zum Einschwingen hat. Mit jedem Burst wird über den Nur-Lese-Speicher PROM die zeitliche Abfolge der Signale GS1 und Wdw neu festgelegt.

Mit der vorgestellten Anordnung lassen sich Laufzeitschwankungen der Bursts von ± 40 Bit erfassen. Die Nachregelung, Zeitpunkt der Vornahme des Phasenvergleichs von Rahmen zu Rahmen beträgt ± 1 Bit.

Der Rücksetzimpuls RL kann auf einfache Weise aus dem Systemtakt CLB und einem Rücksetzimpuls abgeleitet werden, der von den Bodenstationen zu Beginn eines jeden Rahmens ausgesendet wird. Dieser Rücksetzimpuls wird einem Zähler (nicht dargestellt) zugeführt, der vom Systemtakt CLB getaktet wird. Der Zählerausgang ist mit einem weiteren PROM verbunden, welches für jede Bodenstation den richtigen Rücksetzimpuls RL zur Verfügung stellt. Über das PROM können auch die Adreßsignale für die Speicher RAM1 und RAM2 gewonnen werden.

Die Verknüpfungslogik VL1 überprüft, ob ein korrektes Bitmuster am Ausgang des Speichers RAM2 erscheint. Eine solche Bitmusterüberprüfung kann in konventioneller Weise erfolgen. Ist ein korrektes Bitmuster erkannt, wird dieses zusammen mit dem Systemtakt CLB an den Zähler Z3 weitergeleitet. Wird kein korrektes Bitmuster detektiert, wird der Zähler Z3 durch Unterbrechen des Systemtakts CLB mittels VL1 angehalten. Dies hat eine wiederholte Ausgabe des Zeitfenstersignals Wdw zur Folge, was insgesamt eine Fensterverbreiterung bis zum Ende des entsprechenden Bursts bewirkt.

## Patentansprüche

1. Verfahren zum Ausgleichen von durch den Doppler-Effekt hervorgerufenen Laufzeit-Verschiebungen der Bursts mindestens einer Teilnehmerstation bei Empfang durch einen Transponder, wobei die Bursts zu TDMA-Rahmen zusammengefaßt sind, gekennzeichnet durch folgende Schritte:
- Suchen von Bitmustern in den Bursts des ersten TDMA-Rahmens bezüglich jeder Teilnehmerstation, wobei diese Bitmuster zwischen der/den Teilnehmerstation/en und dem Transponder vereinbart sind,
- Generieren eines Steuersignals für einen Phasenvergleich nach Auffinden des jeweiligen Bitmusters,
- Durchführen eines Phasenvergleichs aufgrund des Steuersignals zwischen dem jeweils aus einer Präambel im Burst rückgewonnenen Takt und dem Systemtakt des Transponders bezüglich der Bursts in den auf den ersten TDMA-Rahmen folgenden Rahmen,
- Verzögern der Bursts jeder Teilnehmerstation um einen Bruchteil des Systemtakts, wenn der rückgewonnene Takt bezüglich des Systemtakts um bis zu 180° nacheilt,
- Verzögern der nachfolgenden Bursts jeder Teilnehmerstation um ein Vielfaches dieses Bruchteils, wenn der rückgewonnene Takt bezüglich des Systemtakts um mehr als 180° und weniger als 360° nacheilt.

2. Verfahren nach Anspruch 1, dadurch gekennzeichnet, daß die Phasenvergleichsergebnisse für die Bursts jeder Teilnehmerstation abgespeichert werden und als Bezugswerte für den Phasenvergleich im nächsten TDMA-Rahmen herangezogen werden.

3. Verfahren nach Anspruch 1 oder 2, dadurch gekennzeichnet, daß der Bruchteil des Systemtakts zu 1/2 und das Vielfache dieses Bruchteils zu 2 gewählt wird.

4. Verfahren nach einem der Ansprüche 1 bis 3, dadurch gekennzeichnet, daß die Bursts nach der Verzögerung um einen Bruchteil bzw. um ein Vielfaches dieses Bruchteils nochmals um 1/4 des Systemtakts verzögert werden.

5. Verfahren nach einem der Ansprüche 1 bis 4, dadurch gekennzeichnet, daß zum Auffinden der Bitmuster jeweils ein Suchfenster verwendet wird, dessen Beginn durch Eintreffen der frühesten Burstinformation einer jeden Teilnehmerstation festgelegt wird und dessen Länge so groß gewählt wird bis ein Bitmuster für die betreffende Teilnehmerstation erkannt ist, und daß diese Suchfenster für die nachfolgenden Bursts jeder Teilnehmerstation auf die Länge des jeweiligen Bitmusters einschließlich eines Schwankungsbereiches von beispielsweise 2 Bit reduziert werden.

6. Anordnung zum Durchführen des Verfahrens nach einem der Ansprüche 1 bis 5, gekennzeichnet durch
- ein eingangsseitiges erstes Flip-Flop (FF1) zur Herstellung einer festen Phasenbeziehung zwischen der jeweiligen Burstinformation und dem rückgewonnenen Takt,
- ein zweites Flip-Flop (FF2) für den Phasenvergleich zwischen dem Systemtakt (CLB) und dem rückgewonnenen Takt (CLR)
- eine erste Verknüpfungslogik (OR1) zum Steuern des zweiten Flip-Flops (FF2) in Abhängigkeit des Steuersignals (GS1) für den Phasenvergleich und des Systemtakts (CLB),
- einen ersten Speicher (RAM1) zum Abspeichern der Phasenvergleichsergebnisse aller Teilnehmerstationen,
- ein drittes Flip-Flop (FF3) zur Verzögerung der Bursts um einen Bruchteil des Systemtakts (CLB) oder um ein Vielfaches dieses Bruchteils,
- ein viertes Flip-Flop (FF4) zur Herstellung einer festen Phasenbeziehung zwischen dem Systemtakt (CLB) und den verzögerten Bursts,
- einen Serien-Parallel-Wandler (SP1) zur Serien-Parallel-Wandlung der verzögerten und mit dem Systemtakt in fester Phasenbeziehung befindlichen Bursts,
- eine Vergleichsstufe (EXOR2) für die Parallelausgänge des Serien-Parallel-Wandlers (SP1) mit Schwellwerten, deren Zusammensetzung dem Bitmuster entspricht,
- einen ersten Zähler (Z1) zum Zählen der Übereinstimmungen bezüglich des Bitmusters,
- ein fünftes Flip-Flop (FF5) zur Übernahme des Zählergebnisses des ersten Zählers (Z1),
- einen zweiten Zähler (Z2) zum Zählen von Systemtaktimpulsen, welcher zu einem festen Zeitpunkt rücksetzbar ist,
- einen zweiten Speicher (RAM2) zur Übernahme des Zählergebnisses des zweiten Zählers (Z2), welcher eine in Abhängigkeit des Ausgangssignals des fünften Flip-Flops (FF5) Schreib-/Lesesteuerung aufweist,
- einen als Rückwärtszähler ausgebildeten dritten Zähler (Z3), welcher zum gleichen Zeitpunkt wie der zweite Zähler rücksetzbar ist, und dem als Startwert zum Zählen der Speicherinhalt des zweiten Speichers (RAM2) zuführbar ist,
- eine Verknüpfungslogik (VL1) an den Eingängen des dritten Zählers (Z3) zur Zählersperrung für die Zeit bis das jeweilige Bitmuster gefunden ist,
- einen programmierbaren Nur-Lesespeicher (PROM), dessen Adressierung über den Ausgang des dritten Zählers (Z3) vornehmbar ist.

## Claims

1. A method of compensating for shifts in the transit time of bursts caused by the Doppler effect in at least one subscriber station during reception by means of a transponder, with the bursts being combined into TDMA frames, characterized by the following steps:
- searching for bit patterns in the bursts of the first TDMA frame with respect to each subscriber station, with said bit patterns being agreed upon between the subscriber station(s) and the transponder;
- generating a control signal for a phase comparison after location of the respective bit pattern;
- performing a phase comparison on the basis of the control signal between the clock pulse recovered from a preamble of the burst and the system clock pulse of the transponder with respect to the bursts in the frames following the first TDMA frame;
- delaying the bursts of each subscriber station by a fraction of the system clock pulse if the recovered clock pulse lags behind the system clock pulse by up to 180°;
- delaying the subsequent bursts of each subscriber station by a multiple of said fraction if the recovered clock pulse lags behind the system clock pulse by more than 180° but less than 360°.

2. A method according to claim 1, characterized in that the phase comparison results for the bursts of each subscriber station are stored and are utilized as reference values for the phase comparison within the next TDMA frame.

3. A method according to claim 1 or 2, characterized in that the fraction of the system clock pulse is selected to be 1/2 and the multiple of this fraction is selected to be 2.

4. A method according to one of claims 1 to 3, characterized in that, after a delay by a fraction or a multiple of this fraction, respectively, the bursts are once more delayed by 1/4 of the system clock pulse.

5. A method according to one of claims 1 to 4, characterized in that a search window is employed to locate the bit patterns, the beginning of said window being determined by the arrival of the earliest burst information from each subscriber station and the length of said window being selected to be so large that one bit pattern can be detected for the respective subscriber station and that, for the next following bursts of each subscriber station, said search window is reduced to the length of the respective bit pattern including a fluctuation range of, for example, 2 bits.

6. An arrangement for implementing the method defined in one of claims 1 to 5, characterized by:
- a first flip-flop (FF1) at the input to establish a fixed phase relationship between the respective burst information and the recovered clock pulse;
- a second flip-flop (FF2) for a phase comparison between the system clock pulse (CLB) and the recovered clock pulse (CLR);
- a first linkage logic (OR1) for controlling the second flip-flop (FF2) in dependence on the control signal (GS1) for the phase comparison and the system clock pulse (CLB);
- a first memory (RAM1) for storing the phase comparison results of all subscriber stations;
- a third flip-flop (FF3) for delaying the bursts by a fraction of the system clock pulse (CLB) or by a multiple of said fraction;
- a fourth flip-flop (FF4) for establishing a fixed phase relationship between the system clock pulse (CLB) and the delayed bursts;
- a series/parallel converter (SP1) for the series/parallel conversion of the delayed bursts which are in a fixed phase relationship with the system clock pulse;
- a comparison stage (EXOR2) for the parallel outputs of the series/parallel converter (SP1), said comparison stage including threshold values whose composition corresponds to the bit pattern;
- a first counter (Z1) for counting the coincidences with respect to the bit pattern;
- a fifth flip-flop (FF5) for taking over the counting result of the first counter (Z1);
- a second counter (Z2) for counting system clock pulses, said counter being resettable at a fixed point in time;
- a second memory (RAM2) for taking over the count of the second counter (Z2), said second memory including a read/write control which operates in dependence of the output signal on the fifth flip-flop (FF5);
- a third counter (Z3) configured as a backward counter and being resettable at the same time as the second counter, said third counter receiving as a starting value for counting the memory contents of the second memory (RAM2);
- a linkage logic (VL1) at the inputs of the third counter (Z3) for blocking the counter for the time until the respective bit pattern has been found;
- a programmable read-only memory (PROM) which is addressed by way of the output of the third counter (Z3).

## Revendications

1. Procédé de compensation du décalage, provoqué par l'effet Doppler, du temps de transit des paquets de signaux d'au moins une station participante, lors de la réception par un transpondeur, les paquets de signaux étant regroupés en tranches-cadres, caractérisé par les étapes suivantes :
- recherche de groupes-types de bits dans les paquets de signaux de la première tranche-cadre-TDMA, concernant chaque station participante, ces groupes-types étant convenus entre la/les station/s participante/s et le transpondeur;
- production d'un signal de commande pour une comparaison de phase après détection du groupe-type de bits concerné;
- exécution d'une comparaison de phase sur la base du signal de commande, entre le signal de rythme récupéré à chaque fois à partir d'un préambule dans le paquet de signaux et le signal de rythme du système du transpondeur, pour ce qui est du paquet de signaux dans la tranche-cadre suivant la première tranche cadre TDMA;
- retardement du paquet de signaux de chaque station participante, cela d'une fraction du rythme du système, si le signal de rythme récupéré présente un retard, pouvant atteindre jusqu'à 180° par rapport au signal de rythme du système;
- retardement du paquet de signaux suivant de chaque station participante, cela d'un multiple de cette fraction, si le signal de rythme récupéré est en retard de plus de 180° et de moins de 360° par rapport au signal de rythme du système.

2. Procédé selon revendication 1, caractérisé par le fait que les résultats des comparaisons de phase pour les paquets de signaux de chaque station participante sont mémorisés et utilisés comme valeurs de référence pour la comparaison de phase dans la tranche-cadre TDMA suivante.

3. Procédé selon revendication 1 ou 2, caractérisé par le fait que la fraction du rythme du système adoptée est de 1/2 et le multiple de cette fraction adopté est de 2.

4. Procédé selon l'une des revendications 1 à 3, caractérisé par le fait qu'après le retard d'une fraction ou, selon le cas, d'un multiple, de cette fraction, les paquets de signaux sont encore retardés de 1/4 du rythme du système.

5. Procédé selon l'une des revendications 1 à 4, caractérisé par le fait que, pour déceler les groupes-types de bits on utilise à chaque fois une fenêtre de recherche dont le début est fixé par l'occurrence de l'information la plus précoce du paquet de signaux de l'une de chacune des stations participantes et dont la longueur est choisie avec une grandeur telle qu'elle s'étende jusqu'à ce qu'un groupe-type pour la station participante concernée soit reconnu, et par le fait que ces fenêtres de recherche pour les paquets de signaux suivants de chaque station participante sont réduites à la longueur de chaque groupe de bits, en incluant une plage de fluctutation de par exemple 2 bits.

6. Dispositif de mise en oeuvre du procédé selon l'une quelconque des revendications 1 à 5, caractérisé par
- un premier FLIP-FLOP (FF1) côté entrée, pour créer une première relation de phase entre l'information du paquet de signaux concerné et le signal de rythme récupéré;
- un deuxième FLIP-FLOP (FF2) pour la comparaison de phase entre le signal de rythme du système (CLB) et le signal de rythme récupéré (CLR);
- une première logique de combinaison (OR1) pour commander le deuxième FLIP-FLOP (FF2) en fonction du signal (GS1) commandant la comparaison de phase et en fonction du signal de rythme du système (CLB).
- une première mémoire (RAM1) pour mémoriser les résultats de comparaison de phase de toutes les stations participantes;
- un troisième FLIP-FLOP (FF3) pour retarder les paquets de signaux d'une fraction du rythme du système (CLB) ou d'un multiple de cette fraction,;
- un quatrième FLIP-FLOP (FF4) pour réaliser une première relation de phase entre le signal de rythme du système (CLB) et les paquets de signaux retardés,
- un convertisseur série-parallèle (SP1) pour la conversion série-parallèle des paquets de signaux retardés, se trouvant dans une relation de phase fixe avec le signal de rythme du système,
- un étage comparateur (EXOR2) pour les sorties parallèles du convertisseur série-parallèle (SP1) avec des valeurs de seuil, dont la composition correspond au groupe-type de bits;
- un premier compteur (Z1) pour compter les concordances relatives au groupe-type de bits,
- un cinquième FLIP-FLOP (FF5) pour la prise en charge du résultat de comptage du premier compteur (Z1);
- un deuxième compteur (Z2) pour compter des impulsions de rythme du système, ce compteur pouvant être réinitialisé à un instant fixe;
- une deuxième mémoire (RAM2) pour prendre en charge le résultat de comptage du deuxième compteur (Z2), laquelle présente une commande d'écriture-lecture en fonction du signal de sortie du cinquième FLIP-FLOP (FF5);
- un troisième compteur (Z3) réalisé en tant que décompteur, qui est réinitialisable au même instant que le deuxième compteur et auquel le contenu de la deuxième mémoire (RAM2) peut être amené comme valeur de départ;
- une logique de combinaison (VL1) aux entrées du troisième compteur (Z3), pour le blocage du compteur pendant le temps s'écoulant jusqu'à ce que le groupe-type de bits concerné soit trouvé,
- une mémoire pour lecture seulement (PROM) dont l'adressage peut être effectué par l'intermédiaire de la sortie du troisième compteur (Z3).
